# EUROPEAN PATENT SPECIFICATION

(11) **EP 0 832 950 B1**
(45) Date of publication and mention of the grant of the patent: **19.11.2003**
(21) Application number: 97115438.0
(22) Date of filing: 06.09.1997
(51) Int. Cl.: C09D 201/02, C09D 133/06

(54) **Coating compositions including alkoxy methyl urea compounds having good exterior durability**
Beschichtungszusammensetzungen enthaltend Alkoxymethylharnstoffverbindungen mit guter Wetterbeständigkeit
Compositions de revêtement incluant des composés alkoxy méthyl urée possédant une bonne durabilité en extérieur

(30) Priority: 25.09.1996 US 719670
(43) Date of publication of application: 01.04.1998
(73) Proprietor: BASF CORPORATION, Mount Olive, New Jersey 07828-1234 (US)
(72) Inventor: Rehfuss, John W., West Bloomfield, Michigan 48116 (US)
(74) Representative: Fitzner, Ulrich

(56) References cited:
- EP-A- 0 211 359
- EP-A- 0 594 068
- WO-A-94/10211
- US-A- 5 373 069

## Description

### Background of the Invention

The present invention is related to coating compositions including alkoxy methyl urea crosslinking agents for durable exterior coating compositions.

### Discussion of the Prior Art

Curable coating compositions such as thermoset coatings are widely used in the coatings art. They are often used for topcoats in the automotive and industrial coatings industry. Color-plus-clear composite coatings are particularly useful as topcoats where exceptional gloss, depth of color, distinctness of image, or special metallic effects are desired. The automotive industry has made extensive use of these coatings for automotive body panels. Color-plus-clear composite coatings, however, require an extremely high degree of clarity in the clearcoat to achieve the desired visual effect. High-gloss coatings also require a low degree of visual aberrations at the surface of the coating in order to achieve the desired visual effect such as high distinctness of image (DOI).

As such, these coatings are especially susceptible to a phenomenon known as environmental etch. Environmental etch manifests itself as spots or marks on or in the finish of the coating that often cannot be rubbed out. Coatings containing hydroxyl functional polymers crosslinked with alkoxy methyl urea crosslinking agents historically, do not provide good etch resistance. It is thought that poor durability resulted from self-condensation of the urea, generating ether bridges which hydrolyze rapidly. It is desirable to have a coating composition usable with alkoxy methyl urea crosslinkers that provides a durable exterior coating composition.

It has been found that carbamate or urea functional compounds crosslinked with alkoxy methyl urea crosslinkers provide films exhibiting good durability.

### Summary of the Invention

A coating composition comprising
(a) a first component which is a compound having appended thereto at least one carbamate or urea functional group, or a group convertible to a carbamate or urea group, and
(b) a second component which is a compound reactive with said carbamate or urea groups on component (a), selected from the group consisting of substituted alkoxy methyl urea crosslinkers.

### Detailed Description of the Invention

The coating composition of the present invention comprises a compound (a) selected from the group consisting of oligomers and polymers having appended thereto more than one carbamate group or more than one urea group, or more than one group convertable to a carbamate or urea group. The oligomer has a molecular weight of between 148 and 2000, the preferred molecular weight for the oligomers is between 900 and 1092; polymers have a molecular weight of between 2,000 and 20,000, the preferred molecular weight for the polymers is between 4000 and 6000. Mixtures of said oligomers and polymers may be used as component (A). Molecular weight can be determined by the GPC method using a polystyrene standard. The carbamate or urea content of the polymer, on a molecular weight per equivalent of carbamate or urea functionality, will generally be between 200 and 1200, and preferably between 300 and 800.

Carbamate groups can generally be characterized by the formula 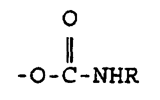 wherein R is H or alkyl, preferably of 1 to 4 carbon atoms. Preferably, R is H or methyl, and more preferably R is H. Urea groups can generally be characterized by the formula 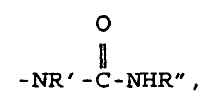 wherein R*'* and R" each independently represents H or alkyl, preferably of 1 to 4 carbon atoms, or R' and R" may together form a heterocyclic ring structure (e.g. where R' and R" form an ethylene bridge).

Groups that can be converted to carbamate include cyclic carbonate groups, epoxy groups, and unsaturated bonds. Cyclic carbonate groups can be converted to carbamate groups by reaction with ammonia or a primary amine, which ring-opens the cyclic carbonate to form a β-hydroxy carbamate. Epoxy groups can be converted to carbamate groups by first converting to a cyclic carbonate group by reaction with CO₂. This can be done at any pressure from atmospheric up to supercritical CO₂ pressures, but is preferably under elevated pressure (e.g. 60-150 psi). The temperature for this reaction is preferably 60-150°C. Useful catalysts include any that activate an oxirane ring, such as tertiary amine or quaternary salts (e.g. tetramethyl ammonium bromide), combinations of complex organotin halides and alkyl phosphonium halides (e.g., ((CH)₃SnI, BU₄SnI, Bu₄PI, and (CH₃)₄PI), potassium salts (e.g., K₂CO₃, KI) preferably in combination with crown ethers, tin octoate, calcium octoate. The cyclic carbonate group can then be converted to a carbamate group as described above. Any unsaturated bond can be converted to carbamate groups by first reacting with peroxide to convert to an epxoy group, then with CO₂ to form a cyclic carbonate, and then with ammonia or a primary amine to form the carbamate.

The oligomeric compound (a), having more than one carbamate functional group has the general formula 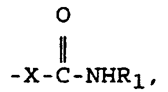 wherein X is O, S or NH, R₁ is H or alkyl of 1 to 4 carbon atoms. The compounds useful as oligomeric component (a) according to the invention can be prepared in a variety of ways.

The carbamate can be primary, terminating in an NH₂ group, or secondary terminating in an NHR group. In a preferred embodiment, the carbamate is primary. One way to prepare oligomeric compounds useful as component (a) is to react an alcohol ('alcohol' is defined herein as having one or more OH groups) with more than one urea to form a compound with carbamate groups. This reaction is accomplished by heating a mixture of the alcohol and ureas. This reaction is also performed under heat, preferably in the presence of a catalyst as is known in the art. Another technique is the reaction of an alcohol with cyanic acid to form a compound with primary carbamate groups (i.e., unsubstituted carbamates). Carbamates may also be prepared by reaction of an alcohol with phosgene and then ammonia to form a compound having primary carbamate groups, or by reaction of an alcohol with phosgene and then a primary amine to form a compound having secondary carbamate groups. Another approach is to react an isocyanate (e.g., HDI, IPDI) with a compound such as hydroxypropyl carbamate to form a carbamate-capped isocyanate derivative. Finally, carbamates can be prepared by a transcarbamylation approach where an alcohol is reacted with an alkyl carbamate (e.g., methyl carbamate, ethyl carbamate, butyl carbamate) to form a primary carbamate group-containing compound. This reaction is performed under heat, preferably in the presence of a catalyst such as an organometallic catalyst (e.g., dibutyltin dilaurate). Other techniques for preparing carbamates are also known in the art and are described, for example, in P. Adams & F. Baron, "Esters of Carbamic Acid", Chemical Review, v. 65, 1965.

Various alcohols can be used in the preparation of carbamate compounds useful as component (a) according to the invention. They generally have from 1 to 200 carbon atoms, preferably 1-60 carbon atoms, and may be monofunctional or polyfunctional (preferably a functionality of 2 to 3), aliphatic, aromatic, or cycloaliphatic. They may contain just OH groups, or they may contain OH groups plus heteroatoms such as O, S, Si, N, P, and other groups such as ester groups, ether groups, amino groups, or unsaturated sites. Examples of useful alcohols include 1,6-hexanediol,1,2-hexanediol, 2-ethyl-1,3-hexanediol, ethyl-propyl-1,5-pentanediol, 2-methyl-2,4-pentanediol, 2,2,4-trimethyl-1,3-pentanediol, 2,4,7,9-tetramethyl-5-decyn-4,7-diol, 1,3-dihydroxyacetone dimer, 2-butene-1,4-diol, pantothenol, dimethyltartrate, pentaethylene glycol, dimethyl silyl dipropanol, and 2,2'-thiodiethanol.

The polymeric compound (a) is selected from the group consisting of a polyester, epoxy, alkyd, urethane, acrylic, polyamide, and polysilane polymers and mixtures thereof, wherein the polymer has more than one carbamate functional group appended thereto.

In a preferred embodiment, component (a) is a carbamate functional acrylic polymer represented by the randomly repeating units according to the following formula:

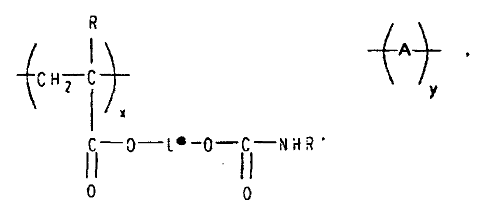

In the above formula, R represents H or CH₃. R' represents H, alkyl, preferably of 1 to 6 carbon atoms, or cycloalkyl, preferably up to 6 ring carbon atoms. It is to be understood that the terms alkyl and cycloalkyl are to include substituted alkyl and cycloalkyl, such as halogen-substituted alkyl or cycloalkyl. Substituents that will have an adverse impact on the properties of the cured material, however, are to be avoided. For example, ether linkages are thought to be susceptible to photo-induced hydrolysis, and should be avoided in locations that would place the ether linkage in the crosslink matrix. The values x and y represent weight percentages, with x being 10 to 90 % and preferably 20 to 50 %, and y being 90 to 10 % and preferably 80 to 50 %.

In the formula, A represents repeat units derived from one or more ethylenically unsaturated monomers. Such monomers for copolymerization with acrylic monomers are known in the art. They include alkyl esters of acrylic or methacrylic acid, e.g., ethyl acrylate, butyl acrylate, 2-ethylhexyl acrylate, butyl methacrylate, isodecyl methacrylate, hydroxyethyl methacrylate, hydroxypropyl acrylate; and vinyl monomers such as unsaturated m-tetramethyl xylene isocyanate (sold by American Cyanamid as TMI®), vinyl toluene, styrene, styrenic derivatives such as α-methyl styrene, t-butyl styrene.

L represents a divalent linking group, preferably an aliphatic of 1 to 8 carbon atoms, cycloaliphatic, or aromatic linking group of 6 to 10 carbon atoms. Examples of L include 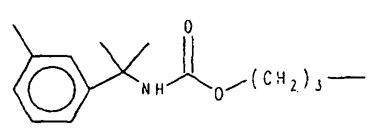 -(CH₂)-, -(CH₂)₂-, -(CH₂)₄-. In one preferred embodiment, -L- is represented by -COO-L'- where L' is a divalent linking group. Thus, in a preferred embodiment of the invention, the polymer component (a) is represented by randomly repeating units according to the following formula:

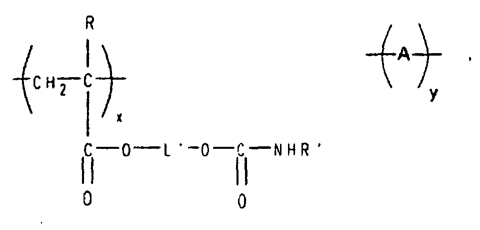

In this formula, R, R', A, x, and y are as defined above. L' may be a divalent aliphatic linking group, preferably of 1 to 8 carbon atoms, e.g., -(CH₂)-, -(CH₂)₂-, -(CH₂)₄-, or a divalent cycloaliphatic linking group, preferably up to 8 carbon atoms, e.g., cyclohexyl. However, other divalent linking groups can be used, depending on the technique used to prepare the polymer. For example, if a hydroxyalkyl carbamate is adducted onto an isocyanate-functional acrylic polymer, the linking group L' would include an -NHCOO- urethane linkage as a residue of the isocyanate group. This carbamate functional acrylic polymer is described in U. S. Patent No. 5,356,669 which is hereby incorporated by reference. The polymer component (a) used in the composition of the invention can be prepared in a variety of ways. One way to prepare such polymers is to prepare an acrylic monomer having a carbamate functionality in the ester portion of the monomer. Such monomers are well-known in the art and are described, for example in U.S. Patents 3,479,328, 3,674,838, 4,126,747, 4,279,833, and 4,340,497, the disclosures of which are incorporated herein by reference. One method of synthesis involves reaction of a hydroxy ester with urea to form the carbamyloxy carboxylate (i.e., carbamate-modified acrylic). Another method of synthesis reacts an a,b-unsaturated acid ester with a hydroxy carbamate ester to form the carbamyloxy carboxylate. Yet another technique involves formation of a hydroxyalkyl carbamate by reacting ammonia, or a primary or secondary amine or diamine with a cyclic carbonate such as ethylene carbonate. The hydroxyl group on the hydroxyalkyl carbamate is then esterified by reaction with acrylic or methacrylic acid to form the monomer. Other methods of preparing carbamate-modified acrylic monomers are described in the art, and can be utilized as well. The acrylic monomer can then be polymerized along with other ethylenically-unsaturated monomers, if desired, by techniques well-known in the art.

An alternative route for preparing an acrylic polymer for use as component (a) in the composition of the invention is to react an already-formed polymer such as an acrylic polymer with another component to form a carbamate-functional group appended to the polymer backbone, as described in U.S. Patent 4,758,632, the disclosure of which is incorporated herein by reference. One technique for preparing such acrylic polymers involves thermally decomposing urea (to give off ammonia and HNCO) in the presence of a hydroxy-functional acrylic polymer or copolymer to form a carbamate-functional acrylic polymer. Another technique involves reacting the hydroxyl group of a hydroxyalkyl carbamate with the isocyanate group of an isocyanate-functional acrylic or vinyl monomer to form the carbamate-functional acrylic. Isocyanate-functional acrylics are known in the art and are described, for example in U.S. Patent 4,301,257, the disclosure of which is incorporated herein by reference. Isocyanate vinyl monomers are well-known in the art and include unsaturated m-tetramethyl xylene isocyanate (sold by American Cyanamid as TMI®). Yet another technique is to react the cyclic carbonate group on a cyclic carbonate-functional acrylic with ammonia in order to form the carbamate-functional acrylic. Cyclic carbonate-functional acrylic polymers are known in the art and are described, for example, in U.S. Patent 2,979,514, the disclosure of which is incorporated herein by reference. A more difficult, but feasible way of preparing the polymer would be to trans-esterify an acrylate polymer with a hydroxyalkyl carbamate.

Groups capable of forming urea groups include amino groups that can be converted to urea groups by reaction with a monoisocyanate (e.g., methyl isocyanate) to form a secondary urea group or with cyanic acid (which may be formed in situ by thermal decomposition of urea) to form a primary urea group. This reaction preferably occurs in the presence of a catalyst as is known in the art. An amino group can also be reacted with phosgene and then ammonia to form a compound having primary urea group(s), or by reaction of an amino group with phosgene and then a primary amine to form a compound having secondary urea groups. Another approach is to react an isocyanate with a hydroxy urea compound to form a urea-capped isocyanate derivative. For example, one isocyanate group on toluene diisocyanate can be reacted with hydroxyethyl ethylene urea, followed by reaction of the other isocyanate group with an excess of polyol to form a hydroxy carbamate.

The composition of the invention is cured by a reaction of the carbamate-functional or urea functional component (a) with a component (b) that contains one or more functional groups that are reactive with the carbamate or urea groups on component (a) , and is an alkoxy methyl urea crosslinker. The crosslinkers may be formed by various methods. One common method involves obtaining ureas by reaction of isocyanate and amine, wherein an aliphatic or aromatic isocyanate is reacted with a primary or secondary aliphatic amine or aromatic amine to yield a urea compound. To obtain the alkoxy methyl urea, the urea is reacted with formaldehyde to form the methylolated urea, where the reaction is either acid or base catalyzed, followed by a condensation reaction that liberates water and results in the formation of a methylene bridge. The condensation reaction is acid catalyzed. The methylol compounds produced by these reactions are relatively stable under neutral or alkaline conditions, but undergo condensation, forming polymeric compounds under acidic conditions. It is desirable to further react the free methylol groups with an alkoxy to form alkoxy methyl groups to make the compounds more stable. With the replacement of the hydrogen of the methylol compound with alkyl groups, the material is more soluble in organic solvents and is more stable. The reaction is acid catalyzed and is carried out in the presence of excess alcohol. The urea may be a di-, tri-, or tetra- substituted methylol urea. The presence of methylol groups makes the urea susceptible to hydrolysis and the formation of unstable ether bridges. It may, therefore, be desirable to utilize other urea starting materials to form the alkoxy methyl urea crosslinker.

Ethylene urea can be used in place of urea, to form the alkoxy methyl urea, and to minimize the reactive sites on the urea. In this case, the ethylene urea is prepared from urea, ethylenediamine and formaldehyde. Generally, the ethylene urea is prepared by reacting excess ethylenediamine with urea and then methylolating with formaldehyde. The ethylene urea provides only two reactive sites for metholation, in contrast to the urea, which may provide up to four sites for methylolation.

Additionally, the alkoxy methyl urea may be formed from di-urea crystals. The di-urea crystals are sometimes taught in the art as rheology control agents. The di-urea crystals are reacted with formaldehyde, followed by reaction with an alcohol, to form the alkoxy methyl urea. Yet another method of forming an alkoxy methyl urea is from a glycol uril. The glycol uril is formed by reacting urea and glyoxal in a molar ratio of 2:1 respectively.

Preferred alkoxy methyl ureas for purposes of the present invention include N, N-dimethyl urea; N, N, N-trimethyl urea; and alkoxy methyl ureas having an alkoxy with a carbon chain length of from 1 to 12 carbon atoms. Particularly preferred are alkoxy methyl ureas having an alkoxy with a carbon chain length of between 1 and 4.

In a coating composition, the alkoxy methyl urea reacts with the carbamate or urea functional compound (a) to form a crosslinked film. The carbamate or urea moiety reacts with'the alkoxy group on the urea crosslinker to form a urethane linkage. A carbamate or urea functional compound is used as component a) instead of a hydroxy functional compound, to minimize formation of ether bridges in a coating composition.

The equivalents ratio of carbamate or urea functionality to methyl alkoxy functionality in a coating composition is between 40:60 to 95:5 and preferably 50:50. Generally, the carbamate functional or urea functional compound is present in an amount between 70 and 90 percent by weight, and the methyl alkoxy urea is present in an amount between 30 and 10 percent by weight based on total coating composition weight.

A coating composition according to the present invention may be utilized, for example, in the form of substantially solid powder, or a dispersion, and optionally solvent may be utilized in the composition of the present invention. It is often desirable that the composition is in a substantially liquid state, which can be accomplished with the use of a solvent. In general, depending on the solubility characteristics of components (a) and (b), the solvent can be any organic solvent and/or water. In one preferred embodiment, the solvent is a polar organic solvent. More preferably, the solvent is a polar aliphatic solvent or polar aromatic solvent. Still more preferably, the solvent is a ketone, ester, acetate, alcohol, aprotic amide, aprotic sulfoxide, or aprotic amine. Examples of useful solvents include methyl ethyl ketone, methyl isobutyl ketone, m-amyl acetate, ethylene glycol butyl ether-acetate, propylene glycol monomethyl ether acetate, xylene, n-methylpyrrolidone, or blends of aromatic hydrocarbons. In another preferred embodiment, the solvent is water or a mixture of water with small amounts of aqueous co-solvents.

The composition of the invention may include a catalyst to enhance the cure reaction. Often it may be desirable to employ a strong acid catalyst to enhance the cure reaction. Such catalysts are well-known in the art and include, for example, p-toluenesulfonic acid, dinonylnaphthalene disulfonic acid, dodecylbenzenesulfonic acid, phenyl acid phosphate, monobutyl maleate, butyl phosphate, and hydroxy phosphate ester.

Additional ingredients may be added to the coating composition, such as, but not limited to pigments, rheology control agents, flow control additives, ultraviolet absorbers, and hindered amine light stabilizers.

In a preferred embodiment of the invention, the composition of the invention is utilized as a pigmented coating composition or clearcoat coating composition. In such a composition, the solvent may be present in the composition of the invention in an amount of from about 0.01 weight percent to about 99 weight percent, preferably from about 10 weight percent to about 60 weight percent, and more preferably from about 30 weight percent to about 50 weight percent.

Coating compositions can be coated on the article by any of a number of techniques well-known in the art. These include, for example, spray coating, dip coating, roll coating, curtain coating. For automotive body panels, spray coating is preferred.

In a particularly preferred embodiment, the composition of the invention is used as a clear and/or colorless coating composition over a pigmented basecoat as part of a composite color-plus-clear coating. Such composite coatings are popular for their depth of color and liquid glossy surface appearance. They have found particularly wide acceptance in the field of automotive coatings. The composition of the invention may also be used as the basecoat of a composite color-plus-clear coating.

Other pigmented basecoat compositions for such composite coatings are well-known in the art, and do not require explanation in detail herein. Polymers known in the art to be useful in basecoat compositions include acrylics, vinyls, polyurethanes, polycarbonates, polyesters, alkyds, and polysiloxanes. A preferred polymer is an acrylic polymer.

After an article is molded, casted, or coated with the above-described layers, the composition is subjected to conditions so as to cure the coating layers. Although various methods of curing may be used, heat-curing is preferred. Generally, heat curing is effected by exposing the coated article to elevated temperatures provided primarily by radiative heat sources. Curing temperatures will vary depending on the aminoplast and functional polymer used, however they generally range between 93°C and 177°C, and are preferably between 121°C and 141°C. The curing time will vary depending on the particular components used, and physical parameters such as the thickness of the layers, however, typical curing times range from 15 to 60 minutes.

The invention is also directed to a method for improving durability of films from coatings using alkoxy methyl urea compounds. The method comprises combining the alkoxy methyl urea compound with a carbamate or urea functional compound to form the coating composition and subsequently applying the coating to a substrate and forming a film. The coating film is heated to form a cured film.

The invention is further described in the following non-limiting examples.

### Examples

### Example 1

### Carbamate Functional Acrylic Polymer

To a clean, dry 5 liter flask equipped with an agitator, condenser and thermocouple was added 417.0 grams propylene glycol methyl ether. Heat was applied and reflux maintained. In a separate vessel were added sequentially, 600.0 grams propylene glycol methyl ether, 0.34 grams 4-methoxy hydroquinone, and 730.5 grams carbamate propyl methacrylate. Mild heating and stirring was applied to the vessel such that homogeneity was reached prior to each addition until a solution was obtained. In a second vessel were added 595.8 grams 2-ethylhexyl acrylate, 384.3 grams styrene, 211.5 grams 2-ethyl hexyl methacrylate, and 319.8 grams t-butyl peroxyacetate (50%). The contents of the first and second vessels were combined and mixed until homogeneous. This mixture was added to the flask at a constant rate for a period of approximately 4 hours. A mixture of 32.1 grams t-butyl peroxyacetate (50%) and 60.0 grams aromatic 100 was added uniformly over 30 minutes. Reflux was maintained for a period of 150 minutes followed by cooling.

### Example 2

| | |
|---|---|
| Blocked Acid Catalyst¹ | 2.18 |
| Polybutyl acrylate flow control agent | 0.9 |
| Hindered Amine Light Stabilizer² | 1.63 |
| Ultraviolet Light Absorber³ | 4.07 |
| Polylauryl methacrylate | 0.35 |
| Silicone Surfactant⁴ | 0.2 |
| Amino methyl propanol | 0.1 |
| Ethanol | 2.9 |
| n-butanol | 7.3 |
| Carbamate-functional acrylic resin-Ex.1 | 145.06 |
| Hydroxy ethyl ethylene urea crosslinker | 11.51 |

| | |
|---|---|
| ¹Diisopropanol amine blocked dodecylbenzene sulfonic acid. | |
| ²Tinuvin 123 from Ciba Giegy Corp. | |
| ³Tinuvin 1130 from Ciba Giegy Corp. | |
| ⁴Byk 320 from Byk Chemie. | |

### Example 3-(Comparison)

### Coating Composition with OH-Functional Acrylic Resin and' Melamine

| **Ingredient** | **Amount (parts by weight)** |
|---|---|
| Blocked Acid Catalyst¹ | 1.27 |
| Polybutyl acrylate flow control agent | 0.52 |
| Hindered Amine Light Stabilizer² | 0.95 |
| Ultraviolet Light Absorber³ | 2.37 |
| Polylauryl methacrylate | 0.20 |
| Silicone Surfactant⁴ | 0.12 |
| Amino methyl propanol | 0.06 |
| Ethanol | 1.69 |
| n-butanol | 4.25 |
| OH-functional acrylic resin | 67.47 |
| Monomeric melamine crosslinker | 17.26 |

| | |
|---|---|
| ¹Diisopropanol amine blocked dodecylbenzene sulfonic acid. | |
| ²Tinuvin 123 from Ciba Giegy Corp. | |
| ³Tinuvin 1130 from Ciba Giegy Corp. | |
| ⁴Byk 320 from Byk Chemie. | |

### Example 4 (Comparison)

### Coating Composition with OH-Functional Acrylic Resin and Alkoxy Methyl Urea Crosslinker-

| **Ingredient** | **Amount** |
|---|---|
| Blocked Acid Catalyst¹ | 2.18 |
| Polybutyl acrylate flow control agent | 0.9 |
| Hindered Amine Light Stabilizer² | 1.63 |
| Ultraviolet Light Absorber³ | 4.07 |
| Polylauryl methacrylate | 0.35 |
| Silicone Surfactant⁴ | 0.20 |
| Amino methyl propanol | 0.10 |
| Ethanol | 2.90 |
| n-butanol | 7.30 |
| OH-functional acrylic resin | 117.20 |
| Hydroxy ethyl ethylene urea crosslinker | 28.51 |

| | |
|---|---|
| ¹Diisopropanol amine blocked dodecylbenzene sulfonic acid. | |
| ²Tinuvin 123 from Ciba Giegy Corp. | |
| ³Tinuvin 1130 from Ciba Giegy Corp. | |
| ⁴Byk 320 from Byk Chemie. | |

**Table 1**

| **Comparative Results for Durability** | | |
|---|---|---|
| **Example** | **Etch *** **(% Gloss Retention)** | **QUV Exposure**** **(% Gloss Retention)** |
| **Ex. 2** Carbamate Functional Resin with Urea Crosslinker | 35.3 | 97.6 |
| **Ex. 3** Hydroxy Functional Acrylic with Melamine Crosslinker | 27.9 | 94.2 |
| **Ex. 4** Hydroxy Functional Acrylic with Urea Crosslinker | 10.2 | 0.8 |

| | | |
|---|---|---|
| *1 year Florida exposure | | |
| **QUV exposure-2500 hours | | |

## Claims

1. A coating composition comprising
(a) a first component comprising a compound having appended thereto at least one functional group selected from the group consisting of a carbamate group, a urea group, a group that can be converted to carbamate or urea, and mixtures thereof; and
(b) a second component comprising a compound reactive with said carbamate groups on component (a) , selected from the group consisting of substituted alkoxy methyl urea crosslinkers.

2. A composition according to claim 1 wherein component (a) comprises a compound selected from the group consisting of oligomers having appended thereto more than one functional group selected from the group consisting of carbamate groups, urea groups and groups that can be converted to carbamate or urea, said oligomers having a molecular weight of between 148 and 2000, polymers having appended thereto more than one functional group selected from the group consisting of carbamate groups, urea groups and functional groups convertible to carbamate or urea groups, said polymers having a molecular weight of greater than 2000, and mixtures of said polymers and oligomers.

3. A composition according to claim 1 wherein said first component is a carbamate or urea functional polymer selected from the group consisting of polyester, epoxy, alkyd, urethane, acrylic, polyamide and polysilane polymers and mixtures thereof.

4. A composition according to claim 2 wherein said polymer comprises a polymer backbone having appended thereto more than one carbamate functional group, said first component being represented by randomly repeating units according the formula: 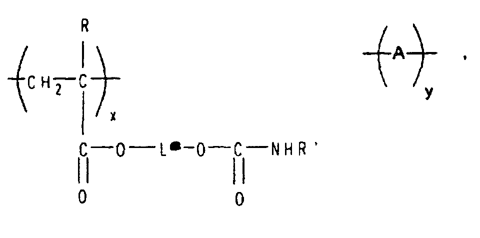 wherein
R represents H or CH₃,
R' represents H, alkyl, or cycloalkyl,
L represents a divalent linking group,
A represents repeat units derived from one or more ethylenically unsaturated monomers,
x represents 10 to 90 weight %, and
y represents 90 to 10 weight %.

5. A composition according to claim 4 comprising one or more ethylenically unsaturated monomers, more than one monomer having appended thereto a carbamate group.

6. A composition according to claim 4 wherein said ethylenically unsaturated monomers comprise one or more acrylic monomers.

7. A composition according to claim 5 wherein said acrylic monomers comprise a carbamate group.

8. A composition according to claim 5 wherein 10-90% of said ethylenically unsaturated monomers are acrylic monomers.

9. A composition according to Claim 4 wherein -L- is represented by the formula -COO-L', where L' is a divalent linking group.

10. A composition according to claim 1 wherein component (a) comprises an oligomer having appended thereto more than one functional group selected from the group consisting of carbamate groups, urea groups, and groups convertible to carbamate or urea, said oligomer having a molecular weight of between 148 and 2000.

11. A composition according to claim 1 wherein compound (b) is selected from the group consisting of alkoxy methyl ureas, wherein the alkoxy group has a carbon chain length between 1 and 12 carbons.

12. A composition according to claim 1 wherein compound (b) is formulated from compounds selected from the group consisting of urea, glycol urils, ethylene urea and di-urea crystals.

13. A method of producing an article with a color-plus-clear composite coating comprising the steps of applying a colored coating composition to a substrate, and applying a clear coating composition over the colored coating composition, wherein the clear coating composition is a curable coating composition comprising:
(a) a first component comprising a compound having appended thereto more than one functional group selected from the group consisting of carbamate groups, urea groups, and groups convertible to carbamate or urea, and
(b) a second component comprising a compound reactive with said carbamate or urea groups on component (a), which is an alkoxy methyl urea.

14. A method according to claim 13 wherein component (a) comprises a compound selected from the group consisting of oligomers having appended thereto more than one functional group selected from the group consisting of carbamate groups, urea groups, and groups convertible to carbamate or urea, said oligomers having a molecular weight of between 148 and 2000, polymers having appended thereto more than one functional group selected from the group consisting of carbamate and urea groups, said polymers having a molecular weight of greater than 2000, and mixtures of said polymers and oligomers.

15. A method according to claim 14 wherein component (a) comprises an oligomer which is a primary carbamate compound.

16. A method according to claim 14 wherein component (a) comprises a carbamate functional polymer selected from the group consisting of polyester, epoxy, alkyd, urethane, acrylic, polyamide and polysilane polymers and mixtures thereof.

17. A method according to claim 14 wherein component (a) comprises a polymer backbone having appended thereto more than one carbamate functional group, said first component being represented by randomly repeating units according the formula: 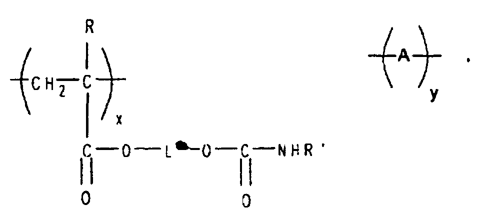 wherein
R represents H or CH₃,
R' represents H, alkyl, or cycloalkyl,
L represents a divalent linking group,
A represents repeat units derived from one or more ethylenically unsaturated monomers,
x represents 10 to 90 weight %, and
y represents 90 to 10 weight %.

18. A method according to claim 17 wherein component (a) comprises a polymer including acrylic monomers, wherein more than one of said acrylic monomers comprise a carbamate group.

19. A method according to claim 17 wherein -L- is represented by the formula -COO-L', where L' is a divalent linking group.

20. A method according to claim 17 wherein the component b) is selected from the group consisting of alkoxy methyl ureas, wherein the alkoxy group on the urea has a carbon chain length between 1 and 12 carbons.

21. An article comprising a substrate having thereon a color-plus-clear composite coating prepared according to the composition of claim 1.

22. A method for improving exterior durability of a clear coat of a color plus clear composite coating comprising combining
a) a first component comprising a compound having appended thereto at least one functional group selected from the group consisting of carbamate groups, urea groups, and groups convertible to carbamate or urea, and
(b) a second component comprising a compound reactive with said carbamate or urea groups on component (a), selected from the group consisting of substituted alkoxy methyl urea crosslinkers,
to form the coating composition and subsequently applying the coating to a substrate, forming a film, and heating the coating film to cure the film.

## Patentansprüche

1. Beschichtungszusammensetzung, umfassend
a) eine erste Komponente, umfassend eine Verbindung, die mindestens eine angefügte funktionelle Gruppe aufweist, die ausgewählt ist aus der Gruppe bestehend aus einer Carbamatgruppe, einer Harnstoffgruppe, einer Gruppe, die in Carbamat oder Harnstoff umgewandelt werden kann, und Mischungen davon; und
b) eine zweite Komponente, umfassend eine Verbindung, die mit den Carbamatgruppen an der Komponente (a) umsetzbar ist, ausgewählt aus der Gruppe bestehend aus substituierten Alkoxymethylharnstoff-Vernetzungsmitteln.

2. Zusammensetzung nach Anspruch 1, wobei die Komponente (a) eine Verbindung umfaßt, die ausgewählt ist aus der Gruppe bestehend aus Oligomeren, die mehr als eine angefügte funktionelle Gruppe, ausgewählt aus der Gruppe bestehend aus Carbamatgruppen, Harnstoffgruppen und Gruppen, die in Carbamat oder Harnstoff umgewandelt werden können, aufweisen, wobei die Oligomere ein Molekulargewicht zwischen 148 und 2.000 aufweisen, die Polymere mehr als eine angefügte funktionelle Gruppe, ausgewählt aus der Gruppe bestehend aus Carbamatgruppen, Harnstoffgruppen und funktionellen Gruppen, die in Carbamat- oder Harnstoffgruppen umwandelbar sind, aufweisen, wobei die Polymere ein Molekulargewicht von größer als 2.000 aufweisen, und Mischungen der Polymere und der Oligomere.

3. Zusammensetzung nach Anspruch 1, wobei die erste Komponente ein Polymer mit Carbamat- oder Harnstoffunktion ist, ausgewählt aus der Gruppe bestehend aus Polyester-, Epoxid-, Alkyd-, Urethan-, Acryl-, Polyamid- und Polysilanpolymeren und Mischungen davon.

4. Zusammensetzung nach Anspruch 2, wobei das Polymer ein Polymerrückgrat umfaßt, das mehr als eine daran angefügte funktionelle Carbamatgruppe aufweist, wobei die erste Komponente durch sich zufällig wiederholende Einheiten dargestellt ist, gemäß der Formel 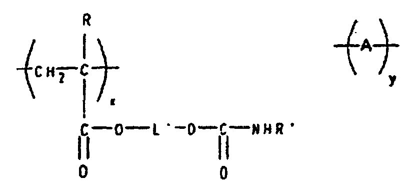 worin
R H oder CH₃ darstellt,
R' H, Alkyl oder Cycloalkyl darstellt,
L eine zweiwertige Verknüpfungsgruppe darstellt,
A Wiederholungseinheiten darstellt, die von einem oder mehreren ethylenisch ungesättigten Monomeren abgeleitet sind,
x 10 bis 90 Gewichtsprozent darstellt, und
y 90 bis 10 Gewichtsprozent darstellt.

5. Zusammensetzung nach Anspruch 4, umfassend ein oder mehrere ethylenisch ungesättigte Monomere, wobei mehr als ein Monomer eine angefügte Carbamatgruppe aufweist.

6. Zusammensetzung nach Anspruch 4, wobei die ethylenisch ungesättigten Monomere ein oder mehrere Acrylmonomere umfassen.

7. Zusammensetzung nach Anspruch 5, wobei die Acrylmonomere eine Carbamatgruppe umfassen.

8. Zusammensetzung nach Anspruch 5, wobei 10 bis 90 % der ethylenisch ungesättigten Monomere Acrylmonomere sind.

9. Zusammensetzung nach Anspruch 4, wobei -L- durch die Formel -COO-L' dargestellt ist, wobei L' eine zweiwertige Verknüpfungsgruppe ist.

10. Zusammensetzung nach Anspruch 1, wobei die Komponente (a) ein Oligomer umfaßt, das mehr als eine angefügte funktionelle Gruppe, ausgewählt aus der Gruppe bestehend aus Carbamatgruppen, Harnstoffgruppen und Gruppen, die in Carbamat oder Harnstoff umwandelbar sind, aufweist, wobei das Oligomer ein Molekulargewicht zwischen 148 und 2.000 aufweist.

11. Zusammensetzung nach Anspruch 1, wobei die Komponente (b) ausgewählt ist aus der Gruppe bestehend aus Alkoxymethylharnstoffen, wobei die Alkoxygruppe eine Kohlenstoffkettenlänge zwischen 1 und 12 Kohlenstoffen aufweist.

12. Zusammensetzung nach Anspruch 1, wobei die Komponente (b) aus Verbindungen formuliert ist, die ausgewählt sind aus der Gruppe bestehend aus Harnstoff, Glycolurilen, Ethylenharnstoff und Di-Harnstoffkristallen.

13. Verfahren zum Herstellen eines Gegenstandes mit einer Farbschicht-Klarschicht-Verbundbeschichtung, umfassend die Schritte des Aufbringens einer farbigen Beschichtungszusammensetzung auf ein Substrat und Aufbringen einer klaren Beschichtungszusammensetzung über der farbigen Beschichtungszusammensetzung, wobei die klare Beschichtungszusammensetzung eine aushärtbare Beschichtungszusammensetzung ist, umfassend:
a) eine erste Komponente, umfassend eine Verbindung, die mehr als eine angefügte funktionelle Gruppe, ausgewählt aus der Gruppe bestehend aus Carbamatgruppen, Harnstoffgruppen und Gruppen, die in Carbamat oder Harnstoff umwandelbar sind, aufweist, und
b) eine zweite Komponente, umfassend eine Verbindung, die mit den Carbamat- oder Harnstoffgruppen an der Komponente (a), die ein Alkoxymethylharnstoff ist, umsetzbar ist.

14. Verfahren nach Anspruch 13, wobei die Komponente (a) eine Verbindung umfaßt, die ausgewählt ist aus der Gruppe bestehend aus Oligomeren, die mehr als eine angefügte funktionelle Gruppe, ausgewählt aus der Gruppe bestehend aus Carbamatgruppen, Harnstoffgruppen und Gruppen, die in Carbamat oder Harnstoff umwandelbar sind, aufweisen, wobei die Oligomere ein Molekulargewicht zwischen 148 und 2.000 aufweisen, die Polymere mehr als eine angefügte funktionelle Gruppe, ausgewählt aus der Gruppe bestehend aus Carbamat- und Harnstoffgruppen, aufweisen, wobei die Polymere ein Molekulargewicht von größer als 2.000 aufweisen, und Mischungen der Polymere und der Oligomere.

15. Verfahren nach Anspruch 14, wobei die Komponente (a) ein Oligomer umfaßt, das eine primäre Carbamatverbindung ist.

16. Verfahren nach Anspruch 14, wobei die Komponente (a) ein Polymer mit Carbamatfunktion umfaßt, ausgewählt aus der Gruppe bestehend aus Polyester-, Epoxid-, Alkyd-, Urethan-, Acryl-, Polyamid- und Polysilanpolymeren und Mischungen davon.

17. Verfahren nach Anspruch 14, wobei die Komponente (a) ein Polymerrückgrat umfaßt, das mehr als eine daran angefügte funktionelle Carbamatgruppe aufweist, wobei die erste Komponente dargestellt ist durch sich zufällig wiederholende Einheiten gemäß der Formel 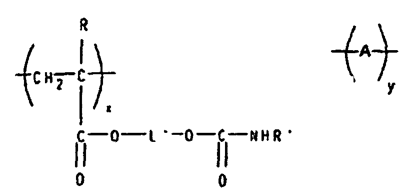 worin
R H oder CH₃ darstellt,
R' H, Alkyl oder Cycloalkyl darstellt,
L eine zweiwertige Verknüpfungsgruppe darstellt,
A Wiederholungseinheiten darstellt, die von einem oder mehreren ethylenisch ungesättigten Monomeren abgeleitet sind, darstellt, und
x 10 bis 90 Gewichtsprozent darstellt, und
y 90 bis 10 Gewichtsprozent darstellt.

18. Verfahren nach Anspruch 17, wobei die Komponente (a) ein Polymer, einschließlich Acrylmonomere, umfaßt, wobei mehr als eines der Acrylmonomere eine Carbamatgruppe umfaßt.

19. Verfahren nach Anspruch 17, wobei -L- durch die Formel -COO-L' dargestellt ist, wobei L' eine zweiwertige Verknüpfungsgruppe ist.

20. Verfahren nach Anspruch 17, wobei die Komponente (b) ausgewählt ist aus der Gruppe bestehend aus Alkoxymethylharnstoffen, wobei die Alkoxygruppe an dem Harnstoff eine Kohlenstoffkettenlänge zwischen 1 und 12 Kohlenstoffen aufweist.

21. Gegenstand, umfassend ein Substrat, das eine Farbschicht-Klarschicht-Verbundbeschichtung auf sich aufweist, die gemäß der Zusammensetzung nach Anspruch 1 hergestellt ist.

22. Verfahren zum Verbessern der Außenwiderstandsfähigkeit einer Klarschicht einer Farbschicht-Klarschicht-Verbundbeschichtung, umfassend das Kombinieren
a) einer ersten Komponente, umfassend eine Verbindung, die mindestens eine angefügte funktionelle Gruppe, ausgewählt aus der Gruppe bestehend aus Carbamatgruppen, Harnstoffgruppen und Gruppen, die in Carbamat oder Harnstoff umwandelbar sind, aufweist, und
b) einer zweiten Komponente, umfassend eine Verbindung, die mit den Carbamat- oder Harnstoffgruppen an der Komponente (a) umsetzbar ist, ausgewählt aus der Gruppe bestehend aus substituierten Alkoxymethylharnstoff-Vernetzungsmitteln,
um die Beschichtungszusammensetzung zu bilden, und anschließendes Aufbringen der Beschichtung auf ein Substrat, Bilden eines Films und Erhitzen des Films, um den Film auszuhärten.

## Revendications

1. Composition de revêtement comprenant:
(a) un premier composant comprenant un composé possédant au moins un groupe fonctionnel qui y est attaché, choisi dans le groupe formé par un groupe carbamate, un groupe urée, un groupe pouvant être converti en un groupe carbamate ou urée, ou leurs mélanges, et
(b) un second composant comprenant un composé réactif avec lesdits groupes carbamate du composant (a), choisi dans le groupe formé par des réticulants d'alcoxyméthylurée substitués.

2. Composition selon la revendication 1, dans laquelle le composant (a) comprend un composé choisi dans le groupe formé par des oligomères auxquels sont attachés plus d'un groupe fonctionnel choisi dans le groupe formé par des groupes carbamate, des groupes urée et des groupes convertibles en carbamate ou urée, lesdits oligomères ayant un poids moléculaire entre 148 et 2000, des polymères auxquels sont attachés plus d'un groupe fonctionnel choisi dans le groupe formé par des groupes carbamate, des groupes urée et des groupes fonctionnels convertibles en groupes carbamate ou urée, lesdits polymères ayant un poids moléculaire supérieur à 2000, et des mélanges desdits oligomères et polymères.

3. Composition selon la revendication 1, dans laquelle ledit premier composant est un polymère à fonction carbamate ou urée choisi dans le groupe formé par un polyester, des polymères époxy, alkydes, uréthannes, acryliques, polyamides et polysilanes, et leurs mélanges.

4. Composition selon la revendication 2, dans laquelle ledit polymère comprend un squelette de polymère auquel sont fixés plus d'un groupe fonctionnel carbamate, ledit premier composant étant représenté par des unités répétitives aléatoires selon la formule: 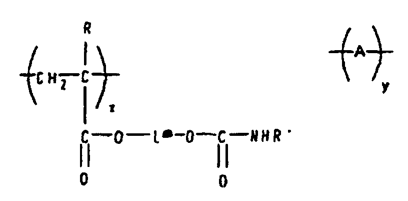 où
R représente H ou CH₃,
R' représente H, un radical alkyle ou cycloalkyle,
L représente un groupe de liaison divalent,
A représente des unités répétitives dérivées d'un ou plusieurs monomères éthyléniquement insaturés,
x représente 10 à 90% en poids, et
y représente 90 à 10% en poids.

5. Composition selon la revendication 4, comprenant un ou plusieurs monomères éthyléniquement insaturés, un groupe carbamate étant attaché à plus d'un monomère.

6. Composition selon la revendication 4, dans laquelle lesdits monomères éthyléniquement insaturés comprennent un ou plusieurs monomères acryliques.

7. Composition selon la revendication 5, dans laquelle lesdits monomères acryliques comprennent un groupe carbamate.

8. Composition selon la revendication 5, dans laquelle 10 à 90% desdits monomères éthyléniquement insaturés sont des monomères acryliques.

9. Composition selon la revendication 4, dans laquelle -L- est représenté par la formule -COO-L', où L' est un groupe de liaison divalent.

10. Composition selon la revendication 1, dans laquelle le composant (a) comprend un oligomère auquel est attaché plus d'un groupe fonctionnel choisi dans le groupe formé par des groupes carbamate, des groupes urée et des groupes convertibles en carbamate ou urée, ledit oligomère ayant un poids moléculaire entre 148 et 2000.

11. Composition selon la revendication 1, dans laquelle le composé (b) est choisi dans le groupe formé par des alcoxyméthylurées, où le groupe alcoxy possède une longueur de chaîne carbonée entre 1 et 12 carbones.

12. Composition selon la revendication 1, dans laquelle le composé (b) est formulé à partir de composés choisis dans le groupe formé par l'urée, des glycoluriles, de l'éthylène urée et des cristaux de diurée.

13. Procédé de production d'un article ayant un revêtement composite couleur-plus-clair, comprenant les étapes d'application d'une composition de revêtement colorée sur un substrat, et d'application d'une composition de revêtement claire sur la composition de revêtement colorée, la composition de revêtement claire étant une composition de revêtement durcissable comprenant:
(a) un premier composant comprenant un composé possédant plus d'un groupe fonctionnel qui y est attaché, choisi dans le groupe formé par des groupes carbamate, des groupes urée, des groupes pouvant être convertis en carbamate ou urée, et
(b) un second composant comprenant un composé réactif avec lesdits groupes carbamate ou urée du composant (a), et qui est une alcoxyméthylurée.

14. Procédé selon la revendication 13 où le composant (a) comprend un composé choisi dans le groupe formé par des oligomères auxquels sont attachés plus d'un groupe fonctionnel choisi dans le groupe formé par des groupes carbamate, des groupes urée et des groupes convertibles en carbamate ou urée, lesdits oligomères ayant un poids moléculaire entre 148 et 2000, des polymères auxquels sont attachés plus d'un groupe fonctionnel choisi dans le groupe formé par des groupes carbamate et des groupes urée, lesdits polymères ayant un poids moléculaire supérieur à 2000, et des mélanges desdits oligomères et polymères.

15. Procédé selon la revendication 14, où le composant (a) comprend un oligomère qui est un composé carbamate primaire.

16. Procédé selon la revendication 14, où le composant (a) comprend un polymère à fonction carbamate choisi dans le groupe formé par un polyester, des polymères époxy, alkydes, uréthannes, acryliques, polyamides et polysilanes, et leurs mélanges.

17. Procédé selon la revendication 14, où le composant (a) comprend un squelette de polymère auquel sont fixés plus d'un groupe fonctionnel carbamate, ledit premier composant étant représenté par des unités répétitives aléatoires selon la formule: 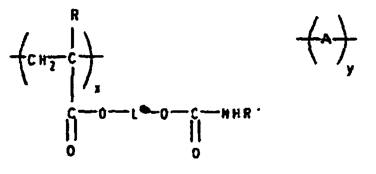 où
R représente H ou CH₃,
R' représente H, un radical alkyle ou cycloalkyle,
L représente un groupe de liaison divalent,
A représente des unités répétitives dérivées d'un ou plusieurs monomères éthyléniquement insaturés,
x représente 10 à 90% en poids, et
y représente 90 à 10% en poids.

18. Procédé selon la revendication 17, où le composant (a) comprend un polymère comprenant des monomères acryliques, où plus d'un desdits monomères acryliques comprend un groupe carbamate.

19. Procédé selon la revendication 17, où -L- est représenté par la formule -COO-L', où L' est un groupe de liaison divalent.

20. Procédé selon la revendication 17, où le composant (b) est choisi dans le groupe formé par des alcoxyméthylurées, où le groupe alcoxy sur l'urée possède une longueur de chaîne carbonée entre 1 et 12 carbones.

21. Article comprenant un substrat recouvert d'un revêtement composite couleur-plus-clair préparé selon la composition de la revendication 1.

22. Procédé pour améliorer la durabilité à l'extérieur d'un revêtement clair d'un revêtement composite couleur-plus-clair, comprenant la combinaison de
(a) un premier composant comprenant un composé possédant au moins un groupe fonctionnel qui y est attaché, choisi dans le groupe formé par des groupes carbamate, des groupes urée, des groupes pouvant être convertis en carbamate ou urée, et
(b) un second composant comprenant un composé réactif avec lesdits groupes carbamate ou urée du composant (a), choisi dans le groupe formé par des réticulants d'alcoxyméthylurée substitués,
pour former la composition de revêtement, et l'application subséquente du revêtement sur un substrat, la formation d'un film, et le chauffage. du film de revêtement pour opérer le durcissement du film.
